# EUROPEAN PATENT APPLICATION

(11) **EP 1 283 246 A1**
(43) Date of publication of application: **12.02.2003**
(21) Application number: 01202913.8
(22) Date of filing: 31.07.2001
(51) Int. Cl.: C09D 5/46, C09D 177/00, C09D 177/02, C09D 177/06, C09D 5/03, C08L 77/00

(54) **Polyamide based powder compositions, methods for their preparation and their use in coil coating**

(71) Applicant: Sigma Coatings S.A., 2100 Deurne (BE)
(72) Inventor: Belladone, Michel, 1301 Bierges (BE); Pierre, David, 1050 Bruxelles (BE)
(74) Representative: Frith, Richard William

(57) **Abstract**

The present invention relates to a polyamide-based powder composition comprising:
- one or more polyamides and
- one or more adhesion promoters chosen from the group consisting of a polyester system, an epoxy system or a mixture thereof.

The composition preferably further comprises one or more pigments.

The invention further relates to the use of the powder composition in coil coating applications.

## Description

### FIELD OF THE INVENTION

The invention relates to a polyamide-based powder composition suitable for coil coatingof metal and other substrates. The invention further relates to methods for the preparation of said powder coatings and to specific uses thereof.

### BACKGROUND OF THE INVENTION

Coatings formed from organic powders, the so-called powder coatings, are gaining acceptance in the industry. Advantages of powder coatings are the elimination of solvents and the potential 100% utilization of the powder, both of which afford a practical means to abate air pollution in mixture processing. Powders have a higher coverage compared to liquid systems resulting in a further economical advantage in the use of powders.

Polyamide-based powders are well known and are commonly employed for coating metal substrates. Polyamide-based powders have good mechanical properties such as high abrasion resistance, impact strength and chemical inert towards many products such as hydrocarbons, bases and inorganic acids.

The adhesion of pure polyamides or mixtures thereof to metals is known, however, to be insufficient, for example as a result of a poor wetting ability of pure polyamides in the molten state. A known method to overcome this shortcoming is to coat the metal substrate with an undercoat, also called an adhesion primer, intended to ensure the mechanical bonding and anchoring of the polyamide powder. The employed adhesion primer is generally based on heat-curable resins and supplied in powder form or in solution or in suspension in organic or aqueous solvents. Additional systems or equipment must therefore be provided for the possible removal of the solvents and for curing the primer before the substrate which is thus clad, is coated with the polyamide powder. The use of an adhesion primer also involves a 2-layer application process, which is a drawback in terms of process ability and from an economical point of view.

In addition, the curing and/or drying of the primer significantly lengthen the duration of the coating operations and hence their cost. More in particular in coil coating this drawback is unacceptable.

Mixtures of polyamides and of epoxy/sulphonamide resins, which can be employed for coating metal substrates without employing an adhesion primer undercoat, have been described in EP 0 412 888. Herein the use of mixtures of polyamide and epoxy/sulphonamide resins in powder form applied to the substrate with an electrostatic gun is disclosed.

Furthermore, in WO 96/20979, powder compositions are described including a polyamide, at least one copolymer of ethylene and at least one co-monomer chosen from unsaturated carboxylic acids, unsaturated carboxylic acid esters or vinyl esters of saturated carboxylic acids.

Powders as a coating technology have been used for many years in general metal application technologies with great success. The use of powder coating compositions can be extremely desirable, as such compositions are essentially free of organic solvents such as are conventionally present in liquid mixture systems. Accordingly, economic and social benefits such as reductions in air pollution, energy requirements, and fire and health hazards can be realized through the use of powder coatings. Powder coating is currently attracting more and more interest form different coating segments such as can and coil coating industries. However, in the can and coil coating industries, powder coatings are only used in specialised fields and at reduced rates. A general overview of powder coatings can be found in 'Powder coatings' by T.A. Misev or by D.M. Howel, published by Wiley & Sons Ltd.

The coil coating industry is showing an increased interest in powder coatings. Powder coatings are presently being applied in specific coil coating lines that run at speeds of approximately 15 to 20 m/min. It is yet not possible to run at higher speeds with conventional electrostatic powder spray technologies. Conventional coil coating lines using solvent-borne coatings have a running speed somewhere between 60 to 120 m/min, which involves curing times of about 15 to 90 seconds. Consequently, these lines will not be retrofitted to powder coating as long as the powder application speed is not up to the required standard, except if specific properties appear to be much more attractive than those obtained with classical liquid systems for coil coating. It is quite clear that development of a high-speed application process will make it possible for powder coatings to make substantial inroads into the coil coating industry. This is a main object of the invention.

Another object, besides high-speed application, is reducing the curing time of powder coatings.

Yet another object of the invention is to overcome deficiencies in the prior art related to polyamide based powder coatings as mentioned above related to the poor adhesion.

Still another object is to provide for a coating that exhibits an excellent adhesion without the need of a separate adhesion primer.

A further object is to provide a powder coating which is durable in time on all kinds of surfaces, i.e. whether metallic or not, and whether pre-treated or not.

### SUMMARY OF THE INVENTION

The inventors surprisingly found that a polyamide-based powder composition comprising a polyamide or mixtures of polyamides and an adhesion promoter chosen from the group consisting of a polyester system, an epoxy system or a mixture thereof resulted in a powder coating fulfilling at least a part of the above-cited objects. Further preferred embodiments of the invention and their effects will be described hereunder.

### DETAILED DESCRIPTION OF THE INVENTION

As used herein the term "system" means a composition suitable as an adhesion promoter consisting essentially of a resin and optionally a suitable hardener for said resin. Optionally other additives or auxiliaries such as pigments, fillers, flow agents, anti-oxidizing agents, waxes, catalysts, matting agents and degassing agents may be present. In a specific embodiment the term "system" may denote a coating or paint composition.

In view thereof the term "polyester system" means a composition consisting essentially of a polyester resin, such as a thermoplastic polyester resin, a self-condensing polyester resin, a hydroxyl-ended polyester resin, a carboxyl-ended polyester resin or any combination thereof. Furthermore, the term "polyester system" may denote a composition consisting essentially of a polyester resin and a suitable hardener for said resin. Suitable hardeners may be chosen from the epoxy compounds, isocyanates, β-hydroxylalkylamides or any combination of these products. As an example β-hydroxylalkylamides are described in the above cited publication Powder Coatings, The Technology, Formulation and Application of Powder Coatings, David M. Howell et al., volume 1, pages 79-81. Yet furthermore, the term "polyester system" may comprise a polyester resin and several additives or auxiliaries, such as pigments, fillers, flow agents, anti-oxidizing compounds, waxes, catalysts, matting agents and degassing agents without any hardener. Furthermore, the term "polyester system" may comprise a mixture of all the above-defined polyester systems.

The similar definition applies to the term "epoxy system". The term "epoxy system" means a composition consisting essentially of an epoxy resin and optionally a suitable hardener for said epoxy resin. Suitable hardeners for an epoxy resin may be chosen from the group consisting of polyester compounds, amines or any combinations of these products. Optionally, other additives or auxiliaries, such as pigments, fillers, flow agents, anti-oxidizing agents, waxes, catalysts, matting agents and degassing agents may be present. The term "epoxy system" may comprise a composition consisting essentially of a self-condensing epoxy resin or an epoxy resin as such or a combination of these resins.

Yet furthermore, the term "epoxy system" may comprise a composition being is a mixture of all the above-defined epoxy systems.

A preferred embodiment according to the invention is a powder composition further comprising a pigment. The main ingredients in the powder composition according to the invention are therefore a polyamide, an adhesion promoter, and a pigment. Preferably said first two ingredients and optionally in combination with the third ingredient constitute over 75%, preferably over 80%, more preferably over 90%, more preferably over 95% and yet more preferably over 99% by weight of the powder composition according to the invention.

A preferred powder composition according to the invention is a powder composition consisting essentially of:
45.0 - 98.9% by weight of at least one polyamide,
0.1-1.0% by weight of a flow agent,
1.0 - 30.0% by weight of an adhesion promoter chosen from the group consisting of a polyester system, epoxy system and a mixture thereof, and
0.0-53.9% by weight of auxiliaries and additives chosen from the group consisting of pigments, fillers, anti-oxidant compounds, waxes, matting agents, flow-agents, degassing agents and catalysts.

These preferred powders are especially suitable for example as a mono-layer application and can be used for the coating of a large choice of metal supports (different natures and presence of pre-treatment or not) and specially fits all requirements for industrial production, in particular for coil coating applications.

Another preferred embodiment provides a powder composition, wherein said adhesion promoters consist essentially of a carboxyl-ended polyester system with acid values between 50 and 100mg KOH/g, preferably between 60 - 80mg KOH/g and more preferably between 68 - 75mg KOH/g. This results in a better interaction with metal and coating, while polyester systems have a molecular weight sufficiently high to ensure polymer chains scaffolding with polyamide, that will ensure adhesion of coating to metal and cohesion inside the coating components. The molecular weight (Mw) is in general higher than 1000.

In a further preferred embodiment a powder composition according to the invention is provided, wherein said adhesion promoter consists essentially of carboxyl-ended polyesters with hydroxyl numbers between 0 and 10mg KOH/g, preferably between 0 and 2mg KOH/g. Such an adhesion promoter is preferred because, in connection with the preferred acid value, such hydroxyl number will provide the required molecular weight to the polyester.

In yet another preferred embodiment a powder composition according to the invention is provided, wherein said adhesion promoter is a mixture of a polyester system and an epoxy system in about equal amounts.

In a second aspect the invention relates to a method comprising dry blending the composition, extruding the blended composition at preferably 90°-120°C, and grinding the blended composition to a particle size below 100 µm, preferably below 60 µm and more preferably below 40 µm.

In a third aspect the invention relates to the use of said powder composition in coil coating applications.

A polyamide is a polymer resulting from polycondensation of dicarboxylic acids and diamines. These monomers can be aromatic or aliphatic, such as hexamethylene diamine, adipic acid and the reacting chemical groups can be present on the same molecule, where therefore polymerisation is a self-polycondensation, such as 12-amino dodecanoïc acid, 11-amino undecanoïc acid. Co-polyamides can also be synthesised by co-polymerisation of different monomers incorporating the same chemical group, e.g. two diamines and two diacids. Suitable polyamides are commercially available for example PA-6, PA-66, PA-6,66, PA-11, PA-12, PA-11,12 and PA-6,12. Polyamides suitable in the invention have advantageously a melting temperature (T°ₘ) between 130 and 270°C, for example, PA-6 (T°ₘ ∼ 225°C), PA-66 (T°ₘ ∼266°C), PA-11 (T°ₘ ∼189°C), PA-12 (T°ₘ ∼179°C). A polyamide suitable for the present invention is preferably presented as a powder having the characteristics of granulometry having an average particle size of 2-60 µm, preferably 5-25 µm, and a melting point of 150°-200°C, preferably 175°-189°C and yet more preferably having a density of 1.2 - 1.4.

Those most advantageously employed are polyamide 11, which can be obtained by condensation of 11-aminoundecanoic acid or of lactam 11, and polyamide 12, which can be obtained by condensation of 12-aminododecanoic acid or of lactam 12.

According to the invention polyamide is also intended to mean polymers that have polyamide blocks in their chain. These are, for example, polyetheresteramides made up of polyamide blocks and of polyether blocks linked by ester functional groups. U.S. Pat. No. 4,230,838 describes a possible preparation of these products. The polymerization of a lactam is performed in the presence of a diacid to obtain a polyamide with carboxylic acid ends, and a polyether with hydroxyl ends is then added to it. The polyether is preferably polytetramethylene glycol, polypropylene glycol or polyethylene glycol.

Other polymers suitable for the invention having polyamide blocks in their chain can be prepared according to U.S. Pat. No. 4,207,410. Lactam, a diacid and a polyether with hydroxyl ending groups are mixed in the presence of water. A polymer having polyamide blocks and polyether blocks mixed with diacid is obtained interlinked by ester functional groups.

The preparation of carboxyl-terminated polyester resins can be done by known processes, by esterification or re-esterification of di- and/or multivalent linear or branched aliphatic or cycloaliphatic or aromatic polyols with multivalent, preferably di-valent aliphatic, cycloaliphatic or aromatic carboxylic acids or the esters thereof in the presence of an esterification or reesterification catalyst at temperatures of approximately 240°C, and at reduced pressure. The polyols conventionally employed include alkylene glycols, such as ethylene glycol, diethylene glycol, propylene glycol, dipropylene glycol, butylene glycol and neopentyl glycol, and other glycols such as hydrogenated bisphenol A, cyclohexanedimethanol, caprolactone-diol reaction products, hydroxyalkylated bisphenols, polyether glycols, e.g., poly(oxytetramethylene) glycol, and similar type compounds. Other diols of various types and polyols of higher functionality may also be used. Such higher polyols include trimethylolpropane, trimethylolethane, pentaerythritol and higher molecular weight polyols. Suitable carboxylic acids used in the reaction with the above-described polyols include phthalic, isophthalic, terephthalic, tetrahydrophthalic, hexahydrophthalic, adipic, azelaic, sebacic, maleic, glutaric, chlorendic, tetrachlorophthalic, maleic, fumaric, itaconic, malonic, 2-methylsuccinic, 3,3-diethylglutaric, 2,2-dimethylsuccinic acid, trimellitic acid, 1,4- cyclohexane dicarboxylic acid and others.

Polyester systems, as adhesion promoters or incorporated in mixtures used as adhesion promoters according to the invention may also be hydroxyl-ended polyester system. In this case the cross-linking agents may be isocyanates. As an example an OH number between 10 and 100, preferably between 15 and 60 and more preferably between 20 and 45 may be used and the acid number is 0-10, preferably 0-3. Possible hardeners in case of mixture powders or polyester/hardener mixtures may be isocyanates, having isocyanates equivalents of 100-1000, preferably 100-500, and more preferably 150-300. These hydroxyl-ended polyesters can be used in the same manner as the carboxyl-ended polyesters, having the same mixture composition and the same composition with polyamide, giving essentially the same results.

Within the meaning of the invention the epoxy resins can be those produced by the attachment of an epoxy group to both ends of a paraffinic hydrocarbon chain (for example, diepoxy compounds derived from butanediol) or of a polyether chain, such as α-ω-diepoxy polypropylene glycol. More exotic diepoxy compounds may also be used, such as vinyl cyclohexene dioxide, 3,4-epoxycyclohexylmethyl 3,4-epoxycyclohexanemonocarboxylate, 3-(3,4-epoxycyclohexyl)-8,9-epoxy-2,4-dioxaspiro-[5.5]undecane, bis(2,3-epoxycyclopentyl) ether, bis(3,4-epoxy-6-methylcyclohexyl) adipate and resorcinol diglycidyl ether. The epoxy compounds employed can contain more than two epoxy functional groups per molecule, such as epoxidized soya oils, polyglycidyl ethers of phenolic resins of the novolak type, p-aminophenoltriglycidyl ether or 1,1,2,2-tetra(p-hydroxyphenyl)ethane tetraglycidyl ether.

One useful class of epoxy resins comprises the epoxy polyethers obtained by the reaction of an epihalohydrin (such as epichlorohydrin or epibromohydrin) with a polyphenol in the presence of an alkali. Suitable polyphenols include resorcinol, catechol, hydroquinone, bis(4-hydroxyphenyl)-2,2-propane, i.e. bisphenol A; bis(4-hydroxyphenyl)-1,1-isobutane, 4,4-dihydroxybenzophenone; bis(4-hydroxyphenyl-1,1-ethane; bis(2-hydroxynaphenyl)-methane; and 1,5-hydroxynaphthalene. One very common epoxy resin is a polyglycidyl ether of a polyphenol, such as bisphenol A. Another class of epoxy resins are the polyglycidyl ethers of polyhydric alcohols. These compounds may be derived from such polyhydric alcohols as ethylene glycol, diethylene glycol, triethylene glycol, 1,2- propylene glycol, 1,4-butylene glycol, 1,5-pentanediol, 1,2,6-hexane-triol, glycerol, trimethylolpropane, and bis(4-hydroxycyclohexyl)-2,2- propane.

The epoxy equivalent weight preferably ranges from 600 to 800 and more preferably from 700 to 750. The epoxy system which are the preferred are those having an overall softening point between 80 and 100°C, more preferably between 90 and 98°C.

The epoxy system can be made by dry blending of the epoxy resin and the additives followed by extrusion of the blend at approximately 90°-120°C and grinding to a particle size below 100 µm, preferably below 60 µm.

The adhesion promoter as a mixture according to the invention may be a polyester system/epoxy system powder. These powders are in general dry blends of synthesised polyesters with commercially available epoxy resins. In a preferred embodiment the polyester epoxy powder comprises about equal amounts by weight of a polyester system and of an epoxy system.

The polyester system/epoxy system mixture may be made by dry blending of epoxy resin and polyester resin followed by extrusion of the blend at approximately 90°-120°C and grinding to a particle size below 100 µm, preferably below 60 µm.

The powder coating composition of the present invention can be clear or pigmented, the particular choice depending upon the final appearance which is desired. Several different pigments can be used in the coating compositions of the present invention.

Suitable auxiliaries or additives such as pigments, fillers, flow agents, anti-oxidizing agents, waxes, catalysts, matting agents and degassing agents without any hardenerare known in the art and are generally chosen dependent upon the final result to be obtained. In the definition or characterization of the powder according to the invention the auxiliaries or additives can originate from a separate addition, from the used adhesion promoters or from a combination thereof. Several of the auxiliaries or additives are exemplified hereunder.

Inorganic pigments which are useful include titanium dioxide, powdered aluminum, silica, iron oxides, talc, mica, clay, zinc oxide, zinc sulfide, zirconium oxide, carbon black and barium sulfate. Organic pigments can also be used if desired like phthalocyanine and anthraquinone derivatives. The pigment preferably employed is titanium dioxide and more preferably in an amount ranging from 10.0 to 20.0% by weight, and more preferably about 15.0% by weight.

Exemplary of the fillers that may be added to the composition is talc, calcium and magnesium carbonates, potassium and aluminum silicates, etc.

Exemplary of the hardening or cross-linking agents is isocyanate compounds with OH-ended polyesters, phenolic ether resins, etc.

Flow agents, e.g. as described in U.S. Pat. No.3,730,930, can be added to improve the flow and leveling of the powder during the heating and fusing of the applied coating. Examples of suitable flow control agents are low molecular weight acrylic ester polymers having a glass transition temperature below that of the film forming compositions used in this invention. Such acrylic ester polymers include polylauryl acrylate, poly(2-ethyl hexyl acrylate) and polybutyl acrylate.

In a powder composition of the invention, various other additives may be incorporated. These additives are well known in the art. Examples of these additives may bedegassing agent, thermal anti-oxidizing agent, matting agent hardening or cross-linking agents, catalyst, wax and the like.

The invention further relates to a method of preparation of a powder composition using the dry blend technique, comprising converting the constituent components of said powder composition into the form of a fine powder and dry mixing the components.

The dry blend technique comprises mixing together, in the dry state, the finely ground resin and the polyamide powder. This dry mixture or dry blend does not require any special apparatus and may be carried out at ambient temperature. As a result thereof it is an economical and rapid production method.

The method further comprised dry blending the composition, extruding the blended composition at preferably 90°-120°C, and grinding the blended composition to an average particle size preferably below 100 µm, more preferably below 60 and yet more preferably below 40 µm.

The final product may be grind according to the usual techniques, to a particle size desired for the coating. The procedure may also involve atomising or precipitation.

Grinding of the powders may be performed in equipment that is cooled cryogenically or with high air input (impeller, hammer or disc mills and the like). The powder particles obtained are selected in suitable equipment to remove the unwanted particle size cuts, for example grains that are too coarse. In general the smallest fraction compatible with the application equipment is preferred, in function of the layer thickness required.

The powder composition may be used as a varnish, without any pigment or filler, or as covering mixture system, incorporating pigments such as titanium dioxide.

The powders according to the invention are in particular suited for coating of metal substrates. Metal substrates may be selected from a wide range of products. It may be hot dip galvanised metal, cold-rolled steel, aluminium, pre-treated or not, with primer or not. The thickness of the metal substrate is immaterial (for example, of the order of a tenth of a millimeter or of the order of several tens of cm, usually between 0.1mm and 3cm).

According to a known technique which as such is not an object of this invention, as such the metal substrate may be subjected to one or more of the following pre-treatments. In metallurgy the surface of the metallic substrates are generally pre-treated via a chemical conversion depending on metal nature (aluminium, galva, galfan...). Such chemical treatments may be coarse degreasing, alkaline degreasing, brushing, fine degreasing, hot rinsing, phosphating degreasing, iron or zinc phosphatation, cold rinsing, chromium rinsing, etc.

The polyamide-based powder compositions of this invention can be applied to the substrate to be coated by any of the well known techniques, e.g. rolling the object to be coated in the powder, flock coating, fluidized bed, flame spraying, electrostatic fluidized bed, electrostatic powder spray, electrostatic cloud chamber and electromagnetic brush. Generally, the thickness of the coating may range from 2 to 120 µm, usually from 20 to 60 µm.

The applied coating is cured e.g. by cross-linking or by fusion melting typically at a peak metal temperature (PMT) generally of from 200 to 350°C, preferably from 250 to 300°C. The oven temperature may range between 250 and 400°C, preferably between 320 and 380°C. The curing time may range between 15 and 90 seconds, preferably between 20 and 60 seconds, more preferably between 35 and 40 seconds, which are times corresponding to coil coating line rates (between generally 30 and 180m/min).

Pre-heating and post-curing are possible resulting also in a good adhesion to the metal support and good mechanical properties.

Because of its mechanical and physical properties the powder composition of the invention can be used in coil coating applications. The powder composition of the invention is especially suitable for coil coating wherein the line speed is of at least 60m/min.

Hereunder several non-limiting examples illustrate the invention. The following examples are illustrative of the present invention and are not intended to limit it to their details. All parts and percentages, unless specified differently, are parts and percentages by weight.

### EXAMPLES

In the examples as the polyamide polyamide 11 (PA 11) synthesised by self-condensation of 11-amino undecanoïc acid and polyamide 12 (PA 12) synthesised by self-condensation of 12-amino dodecanoïc acid were used. These polyamides are used as a powder having a granulometry having an average particle size of 18-25 µm, a melting point of 179°-189°C and a density of 1.2 - 1.4. This powder may include pigments, such as TiO₂, at a level range of 0-30%, without affecting its intrinsic properties. In our examples, PA-11 has a particle size of about 60% of powder is below 22 µm and PA-12 has a particle size of about 70% of powder is below 18 µm. 100% of these powders (PA-11 and PA-12) are below 62 µm.

The polyester system is a carboxyl-ended polyester resin. More specifically the polyester PE1 is made by the addition of:
3.1% water
3.8% diethylene glycol
31.6% NPG (NeoPentyl Glycol)
45.9% TA (Terephtalic Acid)
0.1% catalyst (DBTO i.e. DiButylTinOxide)
0.1% antioxidizing agent (TNPP i.e. TriNonylPhenylPhosphite)
7.5% IPA (Isophtalic Acid)
0.5% AA (Adipic Acid)
7.4% TMA (Trimellitic Anhydride)

The reaction occurs at 240°C under vacuum. The hydroxyl number for PE1 is 1, the acid number is 71 and the Tg is 41°C.

Epoxy systems used in the examples are commercially available. Suitable examples can be EPO NAN YA NPES-903, Araldite PT-810 or GT 7072, Epikote 1055 or 3003, DER 662 or 663. In our examples hereunder, the epoxy system EX1 is an aliphatic epoxy resin with epoxy equivalent of 732 and a softening point of 97°C.

In the examples hereunder the system is a composition of PE1 and EX1 in a weight ratio of 60/40.

This polyester system/epoxy system is in general extruded at about 90°-120°C and ground to a particle size below 60 µm.

The following ingredients are used as powder mixtures, mainly composed by previously described resins or blends of resins. As powder mixtures two systems may be involved, namely the epoxy-based powder and the polyester epoxy-based powder.

An example of an epoxy-based system EP1 consists of:

| | |
|---|---|
| Epoxy resin (EX1) | 63.4% |
| Hardener amine (CASAMID 780) | 3.4% |
| Flow agent | 1.5% |
| Degassing agent | 0.3% |
| Thermal antioxidizing agent | 0.2% |
| Pigment (TiO₂) | 31.2% |

This composition is made by dry blend of these additives followed by extrusion of the blend at a temperature between 90° and 120°C and grinding to a particle size below 60 µm.

An example of a polyester system/epoxy system PEP1 consists of:

| | |
|---|---|
| Polyester (PE1) | 33.3% |
| Hardener (epoxy GT 7072) | 24.7% |
| Flow agent | 1.4% |
| Thermal antioxidizing agent | 0.2% |
| Pigment (TiO₂) | 32.4% |
| Matting agent | 4.8% |
| Wax | 0.3% |
| Catalyst | 2.9% |

Additives may be mixed and prepared into powder following usual processes, as previously described. The particle size is below 60 µm.

As already cited, these polyester systems, epoxy systems, blends of them and powder mixtures are just examples. Several combinations of them, in their composition, or between them are possible.

The complete powder composition including the "adhesion promoter" is prepared following the dry blend technique. Grinding is realised until an average particle size of max. 60 µm is reached.

Sixteen different compositions were prepared of which the constituents are shown in table 1. The titanium dioxide used was TR81 commercial grade.

**Table 1**

| | PA 11 | PA 12 | PE1 | PE1:EX1 60:40 | PEP1 | EX1 | EP1 | TiO₂ | Flow agent |
|---|---|---|---|---|---|---|---|---|---|
| 1 | 84.7% | - | - | - | - | - | - | 15% | 0.3% |
| 2 | 84.7% | - | 15% | - | - | - | - | - | 0.3% |
| 3 | - | 59.7% | - | 10% | - | - | - | 30% | 0.3% |
| 4 | 79.7% | - | 5% | - | - | - | - | 15% | 0.3% |
| 5 | 74.7% | - | 10% | - | - | - | - | 15% | 0.3% |
| 6 | 79.7% | - | - | 5% | - | - | - | 15% | 0.3% |
| 7 | 74.7% | - | - | 10% | - | - | - | 15% | 0.3% |
| 8 | 79.7% | - | - | - | 5% | - | - | 15% | 0.3% |
| 9 | 74.7% | - | - | - | 10% | - | - | 15% | 0.3% |
| 10 | 79.7% | - | - | - | - | 5% | - | 15% | 0.3% |
| 11 | 74.7% | - | - | - | - | 10% | - | 15% | 0.3% |
| 12 | 79.7% | - | - | - | - | - | 5% | 15% | 0.3% |
| 13 | 74.7% | - | - | - | - | - | 10% | 15% | 0.3% |
| 14 | 99.7% | - | - | - | - | - | - | - | 0.3% |
| 15 | 50.0% | - | - | - | - | - | 19.5% | 30.0% | 0.5% |
| 16 | 90.0% | - | 9.9% | - | - | - | - | - | 0.1% |
| Remark: compositions 1, 14 are comparative. | | | | | | | | | |

The compositions are powders and are applied on metal support as a powder. In general no specific method is required, i.e. all common techniques may be used such as electrostatic spray, fluidized bed, powder cloud chamber, electromagnetic brush.

Some more characteristics of the curing are the thickness of the powder layer being 20-60 µm, the curing time is preferably 35-40 seconds, the T° oven is about 320°-380°C and the PMT (peak metal temperature) is about 250°-300°C.

Pre-heating and post-curing may be used. The powder compositions may be applied under coil coating process, or by separated sheet or on any metallic object.

As a metallic support a wide range of products is available. It may be Hot Dip Galvanised metal (HDG), Cold-Rolled Steel (CRS), aluminium, with pre-treatment or not, with primer or not. The thickness of metal is not important and can vary from 0.1mm to 3cm.

Pre-treatment of metal is usual in metallurgy and consists in preparing the surface of the metallic support by a chemical conversion. Such chemical treatments such as chromatation, phosphatation, alcaline oxidation depend on metal nature (aluminium, galva, galfan...).

Hereunder non-limitative examples using the previous defined compositions by reference number of table 1 are illustrated.

Experiments A, B and C are comparative experiments.
- *Experiment A:*: Composition (1) applied at 80 µm on HDG without pre-treatment and curing 50 seconds at 350°C which is a post-curing application.
- *Experiment B:*: Same as experiment A but pre-heating of metal up to 350°C, followed by a cooling down phase by air. Application of powder when metal temperature reaches 300°C which is a pre-heating application.
- *Experiment C*:: Same as experiment B with composition (14).

Experiments 1-12 with powder coatings according to the invention:
- *Experiment 1*:: Composition (4) applied at 60 µm on HDG with pre-treatment. Curing during 40 seconds at 350°C.
- *Experiment 2*:: Composition (4), applied at 40 µm on HDG without pre-treatment. Pre-heating of metal up to 350°C, followed by a cooling down (by air). Application of powder when metal temperature reaches 260°C.
- *Experiment 3*:: Same as experiment 2 with composition (7).
- *Experiment 4*:: Same as experiment 2 with composition (8).
- *Experiment 5*:: Same as experiment 2 with composition (11).
- *Experiment 6*:: Same as experiment 2 with composition (12).
- *Experiment 7*:: Same as experiment 2 with composition (15).
- *Experiment 8*:: Same as experiment 6 on primed metal panel (HDG). The primer used was UPHR primer from Sigma Coatings (reference UC 5753-1023).
- *Experiment 9*:: Same as experiment 4 on primed metal panel (HDG). The primer used was High Gloss primer Cr-free HB179 from Sigma Coatings (reference UC 5755-8798).
- *Experiment 10*:: Same as experiment A with composition (15).
- *Experiment 11*:: Same as experiment B with composition (16).
- *Experiment 12*:: Same as experiment 2 on cold-rolled steel (CRS).

The obtained panels are evaluated following different procedures. The adhesion is checked using a 'coin' test. The coin is pressed on the coated metal with an angle of approx. 45°. Then, keeping the pressure between metal and coin, the coin is moved on the surface for ∼5 cm. Delamination of the coating is evaluated, the application of a tape on a T-bent and the quick removal of it and adhesion at cut edges is evaluated.

The flow is visual and described surface aspect. The mechanical properties are Erichsen 8 mm following the standard method ECCA T6 (ECCA = European Coil Coating Association), Zero T adhesion following the standard method ECCA T7 and reverse impact following the standard method ECCA T5.

The weather resistance is evaluated through a salt spray testing following the standard method ISO 7253 and evaluation of the corrosion according to ECCA-T8 standard method.

Table 2 shows results obtained with the examples described above.

**Table 2**

| | A | B | C | 1 | 2 | 3 | 4 | 5 | 6 | 7 | 8 | 9 | 10 | 11 | 12 |
|---|---|---|---|---|---|---|---|---|---|---|---|---|---|---|---|
| Adhesion | - | - | - | ++ | ++ | ++ | ++ | ++ | ++ | ++ | ++ | ++ | ++ | ++ | ++ |
| Flow | +/- | +/- | - | + | + | + | + | +/- | +/- | + | + | + | + | + | ++ |
| Mechanical properties | ++ | ++ | ++ | - | - | +/- | ++ | ++ | ++ | ++ | +/- | +/- | ++ | ++ | ++ |
| Weather resistance | - | +/- | - | + | + | +/- | +/- | +/- | +/- | +/- | +/- | +/- | +/- | + | +/- |
| Meaning of performances: - :bad; +/-: normal/good; + : very good; ++ : excellent. | | | | | | | | | | | | | | | |

The composition according to the invention performs in general better in all the subtests than the known powder coatings as becomes clear from table 2. They also are environmentally and healthy safe, being a solvent-free composition, a TGIC-free and aCr-free application.

The advantages of the composition according to the invention are further a perfect adhesion to metal support within a large choice of metal supports. Further the use of several primers is possible and the mechanical properties are good to excellent. Furthermore the wide range of the application process and the wide range of the curing process are substantial advantages in a flexible work environment. Another advantage is the sufficiency of a monolayer application. Further it fits all requirements for industrial production such as coil coating.

## Claims

1. A polyamide-based powder composition comprising:
- one or more polyamides and
- one or more adhesion promoters chosen from the group consisting of a polyester system, an epoxy system or a mixture thereof.

2. A polyamide-based powder composition according to claim 1 further comprising one or more pigments.

3. A polyamide-based powder composition according to claim 1 or 2, in which said ingredients constitute over 75% by weight of said composition.

4. A polyamide-based powder composition according to claim 3, in which said ingredients constitute over 80%, preferably over 90%, more preferably over 95%, yet more preferably over 99% by weight of said composition.

5. A polyamide-based powder composition according to any one of claims 1 to 4, further comprising 0.1-1.0% by weight of a flow agent.

6. A polyamide-based powder composition according to any one of claims 1 to 5, consisting essentially of:
45.0 - 98.9% by weight of at least one polyamide,
0.1-1.0% by weight of a flow agent,
1.0 - 30.0% by weight of an adhesion promoter chosen from the group consisting of a polyester system, epoxy system and a mixture thereof, and
0.0-53.9% by weight of auxiliaries and additives chosen from the group consisting of pigments, fillers, anti-oxidant compounds, waxes, matting agents, flow-agents, degassing agents and catalysts.

7. A polyamide-based powder composition according to any one of claims 1 to 6, wherein the amount of the adhesion promoter is from 1 to 20%, preferably 5 to 15% and more preferably from 10 to 15% by weight.

8. A powder composition according to any one of claims 1 to 7, wherein the polyamide constitutes from 50.0 to 98.9%, preferably from 60.0 to 98.9%, more preferably from 70.0 to 98.9% and yet more preferably from 80.0 to 98.9% by weight and still yet more preferably in an amount ranging from 85.0 to 98.9% by weight of the composition.

9. A powder composition according to any one of the previous claims, wherein said polyamide is selected from the group consisting of polyamide-11 and polyamide-12.

10. A powder composition according to claim 9, wherein said at least one polyamide is polyamide-11 preferably from 74.7 to 98.9% by weight.

11. A powder composition according to any one of the previous claims, wherein said polyamide has a particle size ranging from 2 - 60 µm, preferably from 18 - 25 µm.

12. A powder composition according to any one of the previous claims, wherein said adhesion promoter consists essentially of a polyester system.

13. A powder composition according to claim 12, wherein said adhesion promoter consists essentially of carboxyl-ended polyesters with acid values between 50 and 100mg KOH/g, preferably between 60 - 80mg KOH/g and more preferably between 68 - 75mg KOH/g.

14. A powder composition according to claim 12 or 13, wherein said adhesion promoter consist essentially of carboxyl-ended polyesters with hydroxyl numbers between 0 and 10mg KOH/g, preferably between 0 and 2mg KOH/g.

15. A powder composition according to claim 12, wherein said adhesion promoter consists essentially of hydroxyl ended polyesters.

16. A powder composition according to any of the claims 1-11, wherein said adhesion promoter consists essentially of an epoxy system.

17. A powder composition according to claim 16, wherein said epoxy system comprises an epoxy resin having an epoxy equivalent between 600 and 800, preferably between 700 - 750 and a softening point between 80° and 100°C, preferably between 90 - 98°C.

18. A powder composition according to any of the claims 1 to 17, wherein said adhesion promoter has an average particle size below 100 µm, preferably below 60 µm.

19. A powder composition according to any of the claims 1 to 18, comprising preferably in an amount from 10.0 to 20.0% by weight, preferably about 15.0% by weight, more preferably said pigment is titanium dioxide.

20. Method of preparation of a powder composition according to any of the claims 1 to 19, using a dry blend technique comprising converting the constituent components of said powder composition into a fine powder and dry mixing said obtained powder.

21. A method according to claim 20, comprising dry blending the composition, extruding the blended composition at preferably 90°-120°C, and grinding the blended composition to an average particle size below 100 µm, preferably below 60 µm, and more preferably below 40 µm.

22. Use of a powder composition according to any of the claims 1 or 3 to 19 as a varnish.

23. Use of a powder composition according to any of the claims 1 to 19 as a covering coating.

24. Use of a powder composition according to any of the claims 1 to 19 in pre-heating or post-curing applications.

25. Use of a powder composition according to claim 24 in coil coating applications.

26. Use according to claim 25, wherein the line speed is at least 60m/min, preferably about 80 to 120m/min.
